# EUROPEAN PATENT SPECIFICATION

(11) **EP 3 380 740 B1**
(45) Date of publication and mention of the grant of the patent: **18.09.2019**
(21) Application number: 16815677.6
(22) Date of filing: 24.11.2016
(51) Int. Cl.: F16C 33/78, F16C 33/66, F16C 33/58, F16C 35/067, F16C 19/28

(54) **SEALED ROLLING ELEMENTS BEARING**
ABGEDICHTETES WÄLZLAGER
PALIER À ÉLÉMENTS DE ROULEMENT HERMÉTIQUEMENT SCELLÉS

(30) Priority: 27.11.2015 NL 2015878
(43) Date of publication of application: 03.10.2018
(73) Proprietor: Itrec B.V., 3115 HH Schiedam (NL)
(72) Inventor: ROMEIJN, Eric, 3115 HH Schiedam (NL)
(74) Representative: EP&C
(86) International application number: PCT/NL2016/050827
(87) International publication number: WO 2017/091071

(56) References cited:
- WO-A1-2012/128103
- DE-A1-102013 222 049
- JP-A- 2008 115 998
- US-A1- 2009 001 245
- US-A1- 2015 316 103

## Description

The present invention relates to a sealed rolling elements bearing, and a structure wherein such a sealed rolling elements bearing is mounted.

In the art, sealed rolling elements bearings are known, comprising:
- an inner bearing ring comprising at least one inner raceway, said inner bearing ring having axial end portions;
- an outer bearing ring comprising at least one outer raceway, said outer bearing ring having axial end portions;
- a plurality of rolling elements interposed between a pair of inner and outer raceways;
- an axial sealing assembly stationary fixed to an axial end portion of the inner bearing ring and extending toward the axial end portion of the outer bearing ring, said axial sealing assembly comprising:
   ∘ an inside facing the rolling elements and an opposite outside;
   ∘ an annular rigid carrier disc having an inner diameter face at an inner perimeter thereof;
   ∘ a resilient sealing member having a sealing lip, said resilient sealing member being supported by the carrier disc at an outer perimeter thereof;
   wherein said sealing lip slidingly and sealingly engages a corresponding sealing surface of the end portion of said outer bearing ring.

Such known sealed rolling elements bearings are not satisfactory. In particular, the lifetime is limited, e.g. due to dehydration and corrosion.

From US2015/0316103 a sealed rolling elements bearing is known according to the preamble of claim 1. It comprises an elastic member and a core bar. The elastic member covers the outer circumference of the core bar and of sealing assembly, extending between the inner bearing ring and the outer bearing ring.

It is an aim of the present invention to provide an improved sealed rolling elements bearing. This is achieved according to the present invention in that the outer bearing ring has an inwardly protruding rib axially outward of the corresponding sealing surface of the end portion of said outer bearing ring;
wherein the sealing lip has a free end portion remote from the main body of the sealing member, and such that-when seen from the outside, said inwardly protruding rib of the outer bearing ring obscures the free end portion of the sealing lip from view;
wherein the outer perimeter of the carrier disc has a stepped design, with a largest diameter section opposite said inwardly protruding rib of the outer bearing ring, an intermediate diameter section which defines with said sealing member the grease chamber, and with a smallest diameter section defining said groove in which the main body of the sealing member is mounted.

This improved sealing rolling elements bearing provides a grease chamber at the outside of the seal, resulting in an improved lifetime. The construction of the grease chamber between the annular carrier disc, the resilient sealing member and the outer bearing ring provides an improved grease retention, and dispenses the need of additional provisions, such as an external cover to form a grease chamber at the outside of the sealing lip.
The invention also relates to a structure provided with a rotatably supported shaft, wherein the structure has a body with opposed end faces and a hole extending between said end faces, wherein a sealed rolling elements bearing according to one or more of the preceding claims is mounted in said hole, so that said outer bearing ring rests against said body of the structure, and wherein the shaft extends through the inner bearing ring.

The improved sealed roller elements bearing is in particular useful in aggressive circumstances, such as offshore. Structures in which the improved sealed roller elements bearing may be applied include sheaves, tensioners, mud-related activities, soil and sand related activities such as drilling, use in cranes, etc., etc.

Another advantage of the construction of the carrier disc according to the invention is that the resilient member is shielded from external influences such as the aggressive offshore conditions by the carrier disc. The carrier disc is preferably made of metal, in particular steel.

The present invention also relates to a sealed rolling elements bearing comprising:
- an inner bearing ring comprising at least one inner raceway, said inner bearing ring having axial end portions;
- an outer bearing ring comprising at least one outer raceway, said outer bearing ring having axial end portions;
- a plurality of rolling elements interposed between a pair of inner and outer raceways;
- an axial sealing assembly stationary fixed to an axial end portion of the inner bearing ring and extending toward the axial end portion of the outer bearing ring, said axial sealing assembly comprising:
   ∘ an inside facing the rolling elements and an opposite outside;
   ∘ an annular rigid carrier disc having an inner diameter face at an inner perimeter thereof;
   ∘ a resilient sealing member having a main body, mounted on said disc, and an integral conical sealing lip which extends from said main body towards said outer bearing ring as well as towards the outside of the sealing assembly, said sealing lip delimiting a grease chamber for retention of grease therein;
   wherein said sealing lip slidingly and sealingly engages a corresponding sealing surface of the end portion of said outer bearing ring,
**characterised in that,**
wherein at its outer perimeter said annular rigid carrier disc is provided with a groove in which said resilient sealing member is mounted;
wherein the sealing lip has a free end portion remote from the main body of the sealing member;
wherein the outer perimeter of the carrier disc has a stepped design, with a largest diameter section at the outside of the axial sealing assembly, opposite the outer bearing ring, an intermediate diameter section which defines with said sealing member the grease chamber, and with a smallest diameter section at the inside of the axial sealing assembly, defining said groove in which the main body of the sealing member is mounted,
wherein a circumferential gap between the largest diameter section of the outer perimeter of the carrier disc and said outer bearing ring is at most 2 millimetres.

Preferably, the outer bearing ring has an inwardly protruding rib axially outward of the corresponding sealing surface of the end portion of said outer bearing ring, said inwardly protruding rib of the outer bearing ring - when seen from the outside - obscuring the free end portion of the sealing lip from view, and wherein said circumferential gap is provided between the largest diameter section of the outer perimeter of the carrier disc and said inwardly protruding rib.

The invention is further elucidated in the drawings, in which:
Fig. 1 is a schematical representation of a structure according to the invention in cross section;
Fig. 2 is a detailed view on a sealed rolling elements bearing according to the invention in cross section;
Fig. 3 shows, in cross section, part of the structure of fig. 1 in further detail.

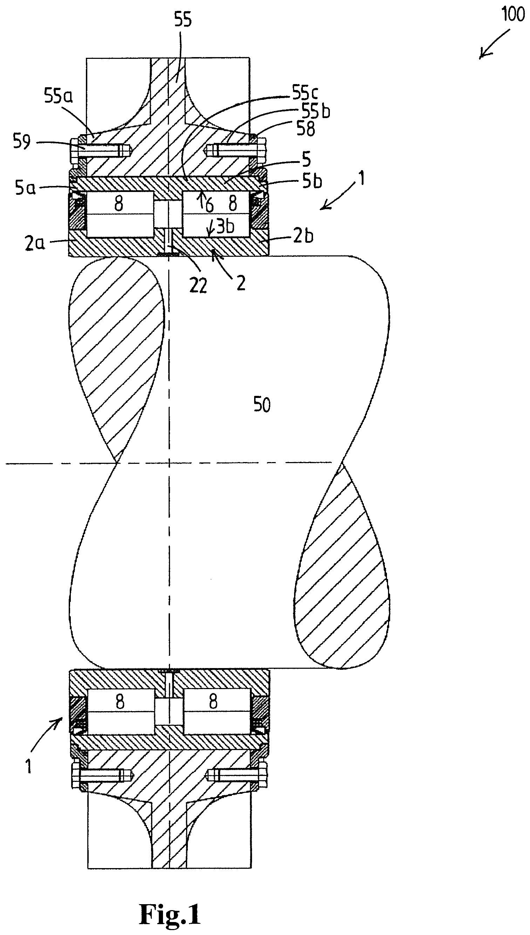

In figs. 1 - 3, a structure 100 is shown, provided with a rotatably supported shaft 50, wherein the structure has a body 55 with opposed end faces 55a; 55b and a hole 55c extending between said end faces. Such a structure is for example a sheave.

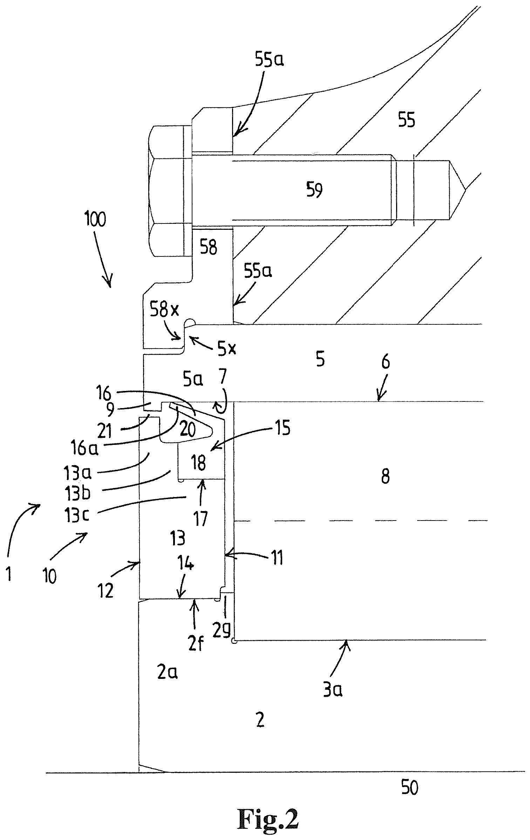

In said hole, a sealed rolling elements bearing 1 is mounted. The sealed rolling elements bearing is shown in further detail in fig. 2. The sealed rolling elements bearing 1 comprises an inner bearing ring 2, comprising at least one inner raceway, said inner bearing ring having axial end portions 2a; 2b. In the shown embodiment, the inner bearing ring 2 is composed of two bearing ring body members 2c, 2d arranged side by side. Bearing ring body member 2c comprises axial end portion 2a, and bearing ring body member 2d comprises axial end portion 2b. Each ring body member 2c, 2d has a single inner raceway 3a, 3b. Said bearing ring body members 2c, 2d are axially interconnected by a connector member 22, e.g. a clip.

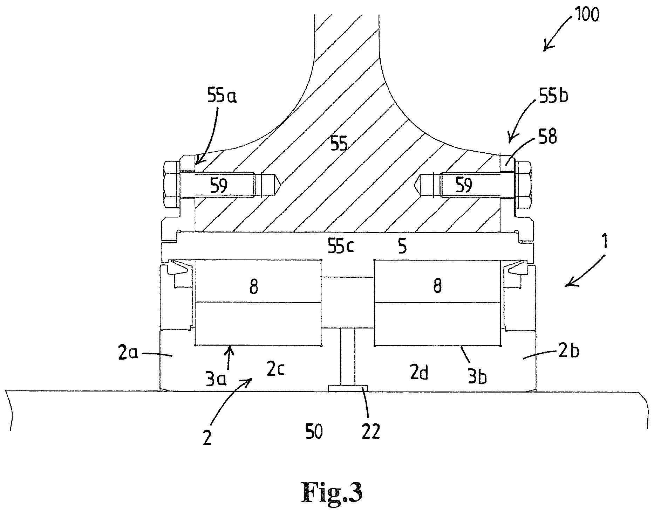

In the embodiments of fig. 1 and 3, the shaft 50 of structure 100 extends through the inner bearing ring 2.

The sealed rolling elements bearing 1 further comprises an outer bearing ring 5 comprising at least one outer raceway 6, said outer bearing ring having axial end portions 5a; 5b. In the embodiments of fig. 1 and 3, the outer bearing ring 5 rests against said body 55 of the structure 100. The outer bearing ring 5 has a single outer bearing ring body with two raceways 6a, 6b.

In the shown embodiment, the outer bearing ring 5 is axial clamped between two opposed retaining rings 58 that are mounted with bolts 59 onto a respective end face 55a; 55b of the body 55 of the structure.

Furthermore, the shown outer bearing ring 5 is provided with a stepped shoulder 5x at each of its axial end portions 5a, which stepped shoulder lies outward of the respective end face of the body 55a of the structure, and wherein each retaining ring 58 has a mating stepped portion 58x that engages said stepped shoulder.

The sealed rolling elements bearing 1 comprises a plurality of rolling elements 8 interposed between a pair of inner and outer raceways. In particular, in the shown embodiment, one set of rolling elements 8 is positioned between a pair of inner and outer raceways.

The rolling elements are preferably cylindrical rolling elements.

In embodiments, not shown, at least one rolling elements cage is provided, wherein a plurality of rolling elements are retained at circumferential spaced locations.

In embodiments, the outer bearing ring raceway has a diameter of between 300 - 800 millimetres, preferably 400-600 millimetres.

In embodiments, the inner bearing ring raceway has a diameter of between 200 - 500 millimetres, preferably 300-400 millimetres.

The sealed rolling elements bearing further comprises an axial sealing assembly 10, stationary fixed to an axial end portion 2a of the inner bearing ring and extending toward the axial end portion 5a of the outer bearing ring.

Said axial sealing assembly 10 comprises an inside 11 facing the rolling elements 8 and an opposite outside 12. It has an annular rigid carrier disc 13 having an inner diameter face 14 at an inner perimeter thereof and a resilient sealing member 15 having a sealing lip 16, said resilient sealing member being supported by the carrier disc at an outer perimeter thereof. The sealing lip 16 slidingly and sealingly engages a corresponding sealing surface 7 of the end portion 5a of said outer bearing ring.

Preferably, the inner diameter face 14 of the annular rigid carrier disc 13, preferably the majority of the annular rigid carrier disc, has a width of at least 5 millimetres, e.g. 5-10 millimetres.

Preferably, said inner diameter face 14 is shrunk radially onto a corresponding shrink fit face 2f of the axial end portion 2a of the inner bearing ring. In the shown embodiment, the inner bearing ring 2 has a shoulder 2g delimiting an inner axial end of said corresponding shrink fit face 2f, against which said carrier disc 13 is mounted. Advantageously, wherein said shrink fit forms the sole fixation of said carrier disc 13 onto the inner bearing ring 2.

Alternative mounting techniques are also conceivable, such as via bolts or welding.

According to the present invention, the outer bearing ring 5 has an inwardly protruding rib 9 axially outward of the corresponding sealing surface 7 of the end portion of said outer bearing ring. In embodiments, said rib has a width of 2-5 millimetres.

Said annular rigid carrier disc 13 is at its outer perimeter provided with a groove 17 in which said resilient sealing member 15 is mounted.

In the shown embodiment, as is preferred, said groove 17 is formed at a corner between an outer perimeter face of the carrier disc and the inside 11 of the carrier disc, so that the carrier disc, seen from the outside, covers a majority of the resilient sealing member 15.

The sealing member 15 has a main body 18, mounted in said groove 17, and an integral conical sealing lip 16 which extends from said main body towards said outer bearing ring 5 as well as towards the outside 12 of the sealing assembly.

The sealing lip 16 has a free end portion 16a remote from the main body 18 of the sealing member, and such that - when seen from the outside - said inwardly protruding rib 9 of the outer bearing ring obscures the free end portion 16a of the sealing lip from view.

The outer perimeter of the carrier disc 13 has a stepped design, with a largest diameter section 13a opposite said inwardly protruding rib 9 of the outer bearing ring, an intermediate diameter section 13b which defines with said sealing member 15 a grease chamber 20 for retention of grease therein, and with a smallest diameter section 13c defining said groove 17 in which the main body 18 of the sealing member is mounted.

Preferably, a circumferential gap 21 between the largest diameter section 13a of the outer perimeter of the carrier disc 13 and said inwardly protruding rib 9 of the outer bearing ring is at most 2 millimetres, more preferably 1 millimetre.

Preferably, a circumferential gap 21 between the largest diameter section 13a of the outer perimeter of the carrier disc 13 and said inwardly protruding rib 9 of the outer bearing ring is at most 3-4 millimetres, more preferably 1-2 millimetres.

Grease chamber 20 is provided between the intermediate diameter section 13b and the opposed sealing surface of the end portion of the outer bearing ring, which defines with said sealing member 15 said grease chamber 20. The circumferential dimension of the grease chamber is advantageously 5-8 times as large as the circumferential gap 21, hence in the order of 5 - 20 millimetres.

## Claims

1. Sealed rolling elements bearing (1) comprising:
- an inner bearing ring (2) comprising at least one inner raceway (3a, 3b), said inner bearing ring having axial end portions (2a; 2b);
- an outer bearing ring (5) comprising at least one outer raceway (6a, 6b), said outer bearing ring having axial end portions (5a; 5b);
- a plurality of rolling elements (8) interposed between a pair of inner and outer raceways;
- an axial sealing assembly (10) stationary fixed to an axial end portion (2a) of the inner bearing ring and extending toward the axial end portion (5a) of the outer bearing ring, said axial sealing assembly comprising:
∘ an inside (11) facing the rolling elements and an opposite outside (12);
∘ an annular rigid carrier disc (13) having an inner diameter face (14) at an inner perimeter thereof;
∘ a resilient sealing member (15) having a main body (18), mounted on said disc (13), and an integral conical sealing lip (16) which extends from said main body towards said outer bearing ring (5) as well as towards the outside (12) of the sealing assembly, said sealing lip delimiting a grease chamber for retention of grease therein;
wherein said sealing lip slidingly and sealingly engages a corresponding sealing surface (7) of the end portion (5a) of said outer bearing ring,
**characterised in that,**
the outer bearing ring (5) has an inwardly protruding rib (9) axially outward of the corresponding sealing surface (7) of the end portion of said outer bearing ring;
wherein at its outer perimeter said annular rigid carrier disc (13) is provided with a groove (17) in which said resilient sealing member (15) is mounted;
wherein the sealing lip (16) has a free end portion (16a) remote from the main body (18) of the sealing member, and such that-when seen from the outside - said inwardly protruding rib (9) of the outer bearing ring obscures the free end portion (16a) of the sealing lip from view;
wherein the outer perimeter of the carrier disc (13) has a stepped design, with a largest diameter section (13a) at the outside of the axial sealing assembly, opposite said inwardly protruding rib (9) of the outer bearing ring, an intermediate diameter section (13b) which defines with said sealing member (15) the grease chamber (20), and with a smallest diameter section (13c) at the inside of the axial sealing assembly, defining said groove (17) in which the main body (18) of the sealing member is mounted.

2. Sealed rolling elements bearing according to claim 1, wherein the inner diameter face (14) of the annular rigid carrier disc (13) has a width of at least 4 millimeters.

3. Sealed rolling elements bearing according to claim 1 or 2, wherein said inner diameter face (14) is shrunk radially onto a corresponding shrink fit face (2f) of the axial end portion (2a) of the inner bearing ring.

4. Sealed rolling elements bearing according to claim 3, wherein the inner bearing ring (2) has a shoulder (2g) delimiting an inner axial end of said corresponding shrink fit face (2f), against which said carrier disc (13) is mounted.

5. Sealed rolling elements bearing according to claim 3, wherein said shrink fit forms the sole fixation of said carrier disc (13) onto the inner bearing ring (2).

6. Sealed rolling elements bearing according to any of the preceding claims, wherein said groove (17) is formed at a corner between an outer perimeter face of the carrier disc and the inside (11) of the carrier disc, so that the carrier disc, seen from the outside, covers a majority of the resilient sealing member (15).

7. Sealed rolling elements bearing according to any of the preceding claims, wherein a circumferential gap (21) between the largest diameter section (13a) of the outer perimeter of the carrier disc (13) and said inwardly protruding rib (9) of the outer bearing ring is at most 2 millimetres.

8. Sealed rolling elements bearing according to any of the preceding claims, wherein the inner bearing ring (2) is composed of two bearing ring body members (2c, 2d) arranged side by side, which are axially interconnected by a connector member (22).

9. A structure (100) provided with a rotatably supported shaft (50), wherein the structure has a body (55) with opposed end faces (55a; 55b) and a hole (55c) extending between said end faces,
wherein a sealed rolling elements bearing (1) according to one or more of the preceding claims is mounted in said hole, so that said outer bearing ring (5) rests against said body (55) of the structure,
and wherein the shaft (50) extends through the inner bearing ring (2).

10. A structure as in claim 9, wherein the outer bearing ring (5) is axial clamped between two opposed retaining rings (58) that are mounted with bolts (59) onto a respective end face (55a; 55b) of the body (55) of the structure.

11. A structure as in claim 10, wherein the outer bearing ring (5) is provided with a stepped shoulder (5x) at each of its axial end portions (5a), which stepped shoulder lies outward of the respective end face of the body (55a) of the structure, and wherein each retaining ring (58) has a mating stepped portion (58x) that engages said stepped shoulder.

## Patentansprüche

1. Abgedichtete Rollelementelagerung (1) umfassend:
- einen inneren Lagerring (2), umfassend mindestens einen inneren Laufring (3a, 3b), wobei der innere Lagerring axiale Endabschnitte (2a; 2b) aufweist;
- einen äußeren Lagerring (5), umfassend mindestens einen äußeren Laufring (6a, 6b), wobei der äußere Lagerring axiale Endabschnitte (5a; 5b) aufweist;
- mehrere Rollelemente (8), welche zwischen einem Paar von innerem und äußerem Laufring angeordnet sind;
- eine axiale Dichtanordnung (10), welche ortsfest mit einem axialen Endabschnitt (2a) des inneren Lagerrings verbunden ist und sich in Richtung des axialen Endabschnitts (5a) des äußeren Lagerrings erstreckt, wobei die axiale Dichtanordnung umfasst:
• eine Innenseite (11), welche den Rollelementen gegenüberliegt, und eine gegenüberliegende Außenseite (12) ;
• eine ringförmige feste Trägerscheibe (13) mit einer inneren Durchmesserfläche (14) an einem inneren Umfang davon;
• ein elastisches Dichtelement (15) mit einem Hauptkörper (18), welcher an der Scheibe (13) angebracht ist, und einer integrierten konischen Dichtlippe (16), welche sich von dem Hauptkörper in Richtung des äußeren Lagerrings (5) sowie in Richtung der Außenseite (12) der Dichtanordnung erstreckt, wobei die Dichtlippe eine Schmiermittelkammer zum Zurückhalten von Schmiermittel darin begrenzt;
wobei die Dichtlippe gleitend und abdichtend mit einer entsprechenden Dichtfläche (7) des Endabschnitts (5a) des äußeren Lagerrings gekoppelt ist,
**dadurch gekennzeichnet, dass**
der äußere Lagerring (5) eine nach innen hervorragende Rippe (9) axial nach außen von der entsprechenden Dichtfläche (7) des Endabschnitts des äußeren Lagerrings aufweist;
wobei die ringförmige feste Trägerscheibe (13) an ihrem äußeren Umfang mit einer Nut (17) versehen ist, in welcher das elastische Dichtelement (15) angebracht ist;
wobei die Dichtlippe (16) einen freien Endabschnitt (16a) entfernt von dem Hauptkörper (18) des Dichtelements und derart aufweist, dass - gesehen von der Außenseite - die nach innen hervorragende Rippe (9) des äußeren Lagerrings den freien Endabschnitt (16a) der Dichtlippe vor einer Ansicht verdeckt;
wobei der äußere Umfang der Trägerscheibe (13) eine gestufte Ausgestaltung aufweist, mit einem größten Durchmesserabschnitt (13a) an der Außenseite der axialen Dichtanordnung, gegenüberliegend der nach innen hervorragenden Rippe (9) des äußeren Lagerrings, einem Zwischendurchmesserabschnitt (13b), welcher mit dem Dichtelement (15) die Schmiermittelkammer (20) definiert, und mit einem kleinsten Durchmesserabschnitt (13c) an der Innenseite der axialen Dichtanordnung, welche die Nut (17) definiert, in welcher der Hauptkörper (18) des Dichtelements angebracht ist.

2. Abgedichtete Rollelementelagerung nach Anspruch 1, wobei die innere Durchmesserfläche (14) der ringförmigen festen Trägerscheibe (13) eine Breite von mindestens 4 Millimeter aufweist.

3. Abgedichtete Rollelementelagerung nach Anspruch 1 oder 2, wobei die innere Durchmesserfläche (14) radial auf eine entsprechende Schrumpfpassungsfläche (2f) des axialen Endabschnitts (2a) des inneren Lagerrings aufgeschrumpft ist.

4. Abgedichtete Rollelementelagerung nach Anspruch 3, wobei der innere Lagerring (2) eine Schulter (2g) aufweist, welche ein inneres axiales Ende der entsprechenden Schrumpfpassungsfläche (2f) begrenzt, gegen welche die Trägerscheibe (13) angebracht ist.

5. Abgedichtete Rollelementelagerung nach Anspruch 3, wobei das Schrumpfpassen die einzige Befestigung der Trägerscheibe (13) an dem inneren Lagerring (2) bildet.

6. Abgedichtete Rollelementelagerung nach einem der vorhergehenden Ansprüche, wobei die Nut (17) an einer Ecke zwischen einer äußeren Umfangsfläche der Trägerscheibe und der Innenseite (11) der Trägerscheibe ausgebildet ist, sodass die Trägerscheibe, betrachtet von der Außenseite, einen Großteil des elastischen Dichtelements (15) bedeckt.

7. Abgedichtete Rollelementelagerung nach einem der vorhergehenden Ansprüche, wobei eine umfängliche Lücke (21) zwischen dem größten Durchmesserabschnitt (13a) des äußeren Umfangs der Trägerscheibe (13) und der nach innen hervorragenden Rippe (9) des äußeren Lagerrings höchstens 2 Millimeter beträgt.

8. Abgedichtete Rollelementelagerung nach einem der vorhergehenden Ansprüche, wobei der innere Lagerring (2) aus zwei nebeneinander angeordneten Lagerringkörperelementen (2c, 2d) gebildet wird, welche axial mittels eines Verbindungselements (22) verbunden sind.

9. Struktur (100), welche mit einer drehbaren Haltewelle (50) versehen ist, wobei die Struktur einen Körper (55) mit Gegenüberliegenden Endflächen (55a; 55b) und einem Loch (55c), welches sich zwischen den Endflächen erstreckt, aufweist,
wobei eine abgedichtete Rollelementelagerung (1) nach einem oder mehreren der vorhergehenden Ansprüche in dem Loch angebracht ist, sodass der äußere Lagerring (5) an dem Körper (55) der Struktur anliegt,
und wobei sich die Welle (50) durch den inneren Lagerring (2) erstreckt.

10. Struktur nach Anspruch 9, wobei der äußere Lagerring (5) axial zwischen zwei gegenüberliegenden Halteringen (58) geklemmt ist, welche mit Bolzen (59) an einer entsprechenden Endfläche (55a; 55b) des Körpers (55) der Struktur angebracht sind.

11. Struktur nach Anspruch 10, wobei der äußere Lagerring (5) mit einer gestuften Schulter (5x) an jedem seiner axialen Endabschnitte (5a) versehen ist, wobei die gestufte Schulter nach außen von der entsprechenden Endfläche des Körpers (55a) der Struktur liegt, und wobei jeder Haltering (58) einen passenden gestuften Abschnitt (58x) aufweist, welcher sich in Eingriff mit der gestuften Schulter befindet.

## Revendications

1. Palier à éléments de roulement hermétiquement scellés (1) comprenant :
une bague de palier interne (2) comprenant au moins un chemin de roulement interne (3a, 3b), ladite bague de palier interne ayant des parties d'extrémité axiales (2a, 2b) ;
une bague de palier externe (5) comprenant au moins un chemin de roulement externe (6a, 6b), ladite bague de palier externe ayant des parties d'extrémité axiales (5a, 5b) ;
une pluralité d'éléments de roulement (8) intercalés entre une paire de chemins de roulement interne et externe ;
un ensemble d'étanchéité axial (10) fixé, de manière fixe, sur une partie d'extrémité axiale (2a) de la bague de palier interne et s'étendant vers la partie d'extrémité axiale (5a) de la bague de palier externe, ledit ensemble d'étanchéité axial comprenant :
un intérieur (11) faisant face aux éléments de roulement et un extérieur (12) opposé ;
un disque de support rigide annulaire (13) ayant une face de diamètre interne (14) au niveau de son périmètre interne ;
un élément d'étanchéité résilient (15) ayant un corps principal (18) monté sur ledit disque (13) et une lèvre d'étanchéité conique solidaire (16) qui s'étend à partir dudit corps principal vers ladite bague de palier externe (5) ainsi que vers l'extérieur (12) de l'ensemble d'étanchéité, ladite lèvre d'étanchéité délimitant une chambre de lubrification pour la rétention de la graisse à l'intérieur de cette dernière ;
dans lequel ladite lèvre d'étanchéité met en prise de manière coulissante et étanche une surface d'étanchéité (7) correspondante de la partie d'extrémité (5a) de ladite bague de palier externe,
**caractérisé en ce que** :
la bague de palier externe (5) a une nervure en saillie vers l'intérieur (9) axialement vers l'extérieur de la surface d'étanchéité (7) correspondante de la partie d'extrémité de ladite bague de palier externe ;
dans lequel, au niveau de son périmètre externe, ledit disque de support rigide annulaire (13) est prévu avec une rainure (17) dans laquelle ledit élément d'étanchéité résilient (15) est monté ;
dans lequel la lèvre d'étanchéité (16) a une partie d'extrémité libre (16a) à distance du corps principal (18) de l'élément d'étanchéité, et de sorte que - lorsqu'elle est observée depuis l'extérieur - ladite nervure en saillie vers l'intérieur (9) de la bague de palier externe dissimule de la vue, la partie d'extrémité libre (16a) de la lèvre d'étanchéité;
dans lequel le périmètre externe du disque de support (13) a une conception étagée, avec la plus grande section de diamètre (13a) à l'extérieur de l'ensemble d'étanchéité axial, opposé à ladite nervure en saillie vers l'intérieur (9) de la bague de palier externe, une section de diamètre intermédiaire (13b) qui définit avec ledit élément d'étanchéité (15), la chambre de lubrification (20), et avec la section de plus petit diamètre (13c) à l'intérieur de l'ensemble d'étanchéité axial, définissant ladite rainure (17) dans laquelle le corps principal (18) de l'élément d'étanchéité est monté.

2. Palier à éléments de roulement hermétiquement scellés selon la revendication 1, dans lequel la face de diamètre interne (14) du disque de support rigide annulaire (13) a une largeur d'au moins 4 millimètres.

3. Palier à éléments de roulement hermétiquement scellés selon la revendication 1 ou 2, dans lequel ladite face de diamètre interne (14) est radialement rétrécie sur une face d'ajustement par contraction (2f) correspondante de la partie d'extrémité axiale (2a) de la bague de palier interne.

4. Palier à éléments de roulement hermétiquement scellés selon la revendication 3, dans lequel la bague de palier interne (2) a un épaulement (2g) délimitant une extrémité axiale interne de ladite face d'ajustement par contraction (2f) correspondante contre laquelle ledit disque de support (13) est monté.

5. Palier à éléments de roulement hermétiquement scellés selon la revendication 3, dans lequel ledit ajustement par contraction forme la seule fixation dudit disque de support (13) sur la bague de palier interne (2).

6. Palier à éléments de roulement hermétiquement scellés selon l'une quelconque des revendications précédentes, dans lequel ladite rainure (17) est formée au niveau d'un coin entre une face périmétrale externe du disque de support et l'intérieur (11) du disque de support, de sorte que le disque de support, observé depuis l'extérieur, recouvre une majeure partie de l'élément d'étanchéité résilient (15).

7. Palier à éléments de roulement hermétiquement scellés selon l'une quelconque des revendications précédentes, dans lequel un espace circonférentiel (21) entre la section de plus grand diamètre (13a) du périmètre externe du disque de support (13) et ladite nervure en saillie vers l'intérieur (9) de la bague de palier externe est de 2 millimètre au maximum.

8. Palier à éléments de roulement hermétiquement scellés selon l'une quelconque des revendications précédentes, dans lequel la bague de palier interne (2) est composée de deux éléments de corps de bague de palier (2c, 2d) agencés côte à côte, qui sont axialement interconnectés par un élément de connecteur (22).

9. Structure (100) prévue avec un arbre (50) supporté en rotation, dans laquelle la structure a un corps (55) avec des face d'extrémité (55a ; 55b) opposées et un trou (55c) s'étendant entre lesdites faces d'extrémité,
dans laquelle un palier à éléments de roulement hermétiquement scellés (1) selon une ou plusieurs des revendications précédentes, est monté dans ledit trou, de sorte que ladite bague de palier externe (5) s'appuie contre ledit corps (55) de la structure,
et dans lequel l'arbre (50) s'étend à travers la bague de palier interne (2).

10. Structure selon la revendication 9, dans laquelle la bague de palier externe (5) est serrée de manière axiale entre deux bagues de retenue (58) opposées qui sont montées avec des boulon (59) sur une face d'extrémité (55a, 55b) respective du corps (55) de la structure.

11. Structure selon la revendication 10, dans laquelle la bague de palier externe (5) est prévue avec un épaulement étagé (5x) au niveau de chacune de ses parties d'extrémité axiales (5a), lequel épaulement étagé est vers l'extérieur de la face d'extrémité respective du corps (55a) de la structure, et dans laquelle chaque bague de retenue (58) a une partie étagée de couplage (58x) qui met en prise ledit épaulement étagé.
